# EUROPÄISCHE PATENTSCHRIFT

(11) **EP 3 769 042 B1**
(45) Veröffentlichungstag und Bekanntmachung des Hinweises auf die Patenterteilung: **06.09.2023**
(21) Anmeldenummer: 19714343.1
(22) Anmeldetag: 21.03.2019
(51) Int. Cl.: G01C 21/32, G01C 21/36

(54) **SYSTEM ZUR ERZEUGUNG VON KONFIDENZWERTEN IM BACKEND**
SYSTEM FOR GENERATING CONFIDENCE VALUES IN BACK-END
SYSTEME POUR GENERATION DE VALEURS DE CONFIDENCE AU BACK-END

(30) Priorität: 23.03.2018 DE 102018204500
(43) Veröffentlichungstag der Anmeldung: 27.01.2021
(73) Patentinhaber: Continental Automotive Technologies GmbH, 30165 Hannover (DE)
(72) Erfinder: HAMER, Henning, 81737 München (DE); KARN, Holger, 81737 München (DE)
(74) Vertreter: Continental Corporation
(86) Internationale Anmeldenummer: PCT/EP2019/057099
(87) Internationale Veröffentlichungsnummer: WO 2019/180149

(56) Entgegenhaltungen:
- DE-A1-102016 216 154
- US-A1- 2017 010 117

## Beschreibung

Die Erfindung betrifft ein Objektkonfidenzwerterzeugungssystem zur Erzeugung von Konfidenzwerten für Objekte in einer digitalen Straßenkarte, ein Backend mit einer digitalen Straßenkarte, ein Verfahren zur Erzeugung von Konfidenzwerten für Objekte in einer digitalen Straßenkarte, Programmelemente und computerlesbare Medien.

Fahrzeuge werden zunehmend mit Fahrerassistenzsystemen ausgerüstet, welche den Fahrer bei der Durchführung von Fahrmanövern unterstützen. Ferner werden zunehmend Fahrzeuge mit hoch- oder vollautomatischen Fahrfunktionen ausgerüstet. Für diese hoch- oder vollautomatischen Fahrfunktionen sind hoch präzise digitale Straßenkarten erforderlich, um eine sichere und verlässliche Navigation der Fahrzeuge sicherzustellen und Objekte, wie Verkehrszeichen oder Fahrbahnmarkierungen, zu erkennen. Ferner müssen diese digitalen Straßenkarten stets den aktuellen Stand der Straßen und Verkehrszeichen aufweisen, um die hoch- oder vollautomatischen Fahrfunktionen zu ermöglichen. Des Weiteren weisen heutige Fahrzeuge eine hohe Anzahl an Sensoren zur Erfassung der Fahrzeugumgebung auf.

Das Dokument DE 102016216154 A1 beschreibt ein Verfahren zur Ermittlung von Positionen von Verkehrszeichen in einem Stra-ßennetz. Das Verfahren umfasst das Ermitteln eines Pfades durch einen Teilbereich des Straßennetzes. Außerdem umfasst das Ver-fahren das Ermitteln von Messdaten einer Vielzahl von Fahrten von ein oder mehreren Fahrzeugen entlang des Pfades, wobei die Messdaten einer Fahrt ein oder mehrere Verkehrszeichen-Datensätze für entsprechende ein oder mehrere detektierte Verkehrszeichen umfassen, die bei der Fahrt entlang des Pfades detektiert wurden.

Das Dokument US 2017010117 A1 beschreibt ein Fahrzeug und eine Methode zur Steuerung des Fahrzeugs. Das Fahrzeug verfügt über eine Bilderfassungseinheit, die so konfiguriert ist, dass Bildinformationen durch Bildgebung einer Vorwärtsansicht des Fahrzeugs erfasst werden, und über eine Bildverarbeitungseinheit, die so konfiguriert ist, dass anhand der erfassten Bildinformationen festgestellt wird, ob ein Verkehrszeichen, das Geschwindigkeitsbegrenzungsinformationen einer Straße anzeigt, ungewöhnlich ist.

Es ist eine Aufgabe der Erfindung, eine digitale Straßenkarte zu aktualisieren, zu ändern oder zu erstellen.

Diese Aufgabe wird durch den Gegenstand der unabhängigen Ansprüche gelöst. Ausführungsformen und Weiterbildungen sind den abhängigen Ansprüchen, der Beschreibung und den Figuren zu entnehmen.

Ein erster Aspekt der Erfindung betrifft ein Objektkonfidenzwerterzeugungssystem zur Erzeugung von Konfidenzwerten für Objekte in einer digitalen Straßenkarte. Das Objektkonfidenzwerterzeugungssystem weist ein Backend und eine Objekterkennungsvorrichtung für ein Fahrzeug auf. Die Objekterkennungsvorrichtung weist ihrerseits eine Erfassungseinheit, eine Auswerteeinheit, eine Positionierungseinheit und eine Sende-/ Empfangseinheit auf. Die Erfassungseinheit ist dazu eingerichtet, Umfelddaten von einem Fahrzeug zu erfassen. Die Positionierungseinheit ist dazu eingerichtet, die Position der erfassten Umfelddaten und der darin enthaltenen Objekte zu bestimmen. Die Auswerteeinheit ist dazu eingerichtet, die von der Erfassungseinheit erfassten Umfelddaten auszuwerten und Objekte und Verdeckungen der Objekte in den Umfelddaten zu erkennen sowie diese mit Positionsinformationen zu versehen. Die Sende-/ Empfangseinheit ist dazu eingerichtet, die von der Auswerteeinheit ausgewerteten Daten an das Backend zu übertragen. Das Backend ist dazu eingerichtet, die Daten der Sende-/ Empfangseinheit zu empfangen und die digitale Straßenkarte zu erzeugen, zu ändern oder zu aktualisierten. Ferner weist jedes der Objekte der digitalen Straßenkarte des Backends einen Konfidenzwert auf. Das Backend ist ferner dazu eingerichtet, den Konfidenzwert des jeweiligen Objekts zu erhöhen, wenn das jeweilige Objekt in den empfangenen Daten enthalten ist, und den Konfidenzwert des jeweiligen Objekts zu reduzieren, wenn das jeweilige Objekt nicht in den empfangenen Daten enthalten ist, wobei bei einer Verdeckung des Objekts in den empfangenen Daten keine Reduktion des Konfidenzwertes des jeweiligen Objektes durchgeführt wird.

Zur Verbesserung der Qualität von digitalen Straßenkarten können diese auf Basis von durch die Fahrzeuge selbst gesammelter bzw. erzeugter Daten kontinuierlich aktualisiert, geändert oder erzeugt werden. Hierzu kann auf einem Backend eine digitale Straßenkarte vorhanden sein und eine Mehrzahl an Objekterkennungsvorrichtungen, z.B. in Fahrzeugen, können als Sensoren auf der Straße genutzt werden. Insbesondere können so die Straßenführung (Weg) und Objekte, wie Verkehrszeichen, in der digitalen Straßenkarte aktualisiert, geändert oder erzeugt werden. Zu diesem Zweck kann jedes der Objekte der digitalen Straßenkarte einen individuellen Konfidenzwert aufweisen, welcher angibt wie zuverlässig die Information, z.B. die Existenz, die Position oder der Inhalt, über dieses Objekt ist. Dieser Konfidenzwert kann durch das Backend basierend auf Daten der Objekterkennungsvorrichtung bzw. einer Vielzahl an Objekterkennungsvorrichtungen geändert werden. Der Konfidenzwert kann beispielsweise zwischen 0 und 1 liegen, wobei 1 eine maximale Zuverlässigkeit der Information über das jeweilige Objekt angibt und 0 eine minimale Zuverlässigkeit dieser Information angibt. Hierbei kann die Idee zugrunde liegen, dass eine Vielzahl an Objekterkennungsvorrichtungen ein Objekt erkennt oder nicht erkennt (weil es nicht mehr vorhanden ist) . Somit können einzelne Fehler in der Erkennung durch einzelne Objekterkennungsvorrichtungen im Mittel ausgeschlossen, behoben bzw. reduziert werden. Hierdurch kann schrittweise der Konfidenzwert des Objekts angepasst werden und Änderungen der Objekte im Straßenverkehr können so automatisch und kontinuierlich durch das Backend erfasst werden, sodass stets eine aktuelle Repräsentation der Realität in der digitalen Straßenkarte auf dem Backend abgebildet werden kann. Überschreitet der Konfidenzwert eines neuen Objekts (bisher nicht in der digitalen Straßenkarte vorhanden) einen vordefinierten Schwellwert, kann davon ausgegangen werden, dass dieses Objekt auch in der Realität vorhanden ist und es kann zu der digitalen Straßenkarte hinzugefügt werden. Unterschreitet der Konfidenzwert eines Objekts hingegen einen vordefinierten Schwellwert, kann davon ausgegangen werden, dass dieses Objekt in der Realität nicht mehr vorhanden ist und somit kann es aus der digitalen Straßenkarte entfernt werden. Das Backend kann den Konfidenzwert eines Objekts erhöhen, wenn es durch die Objekterkennungsvorrichtung erkannt wurde und in den an das Backend übertragenen Daten enthalten ist. Ferner kann das Backend den Konfidenzwert eines Objekts reduzieren, wenn dieses durch die Objekterkennungsvorrichtung nicht erkannt wurde oder nicht in den an das Backend übertragenen Daten enthalten ist. Ferner kann das Backend den Konfidenzwert des Objekts der digitalen Straßenkarte nicht ändern bzw. anpassen, wenn der Bereich des vermeintlichen Objekts verdeckt ist, z.B. durch einen anderen Verkehrsteilnehmer (LKW) oder eine Bebauung (Baum). Durch die Verdeckung konnte das Objekt von der Objekterkennungsvorrichtung nicht erkannt werden, da es nicht sichtbar war. Ferner kann so einer Verfälschung des Konfidenzwertes vorgebeugt werden, da bei einer stark befahrenen Straße manche Objekte oft verdeckt sein können, und diese somit einen zu geringen Konfidenzwert aufweisen würden. Mit anderen Worten, erfolgt keine Anpassung bzw. Änderung des Konfidenzwerts, wenn eine Verdeckung von dem vermeintlichen Objekt erkannt wurde.

Es sei angemerkt, dass das Backend auch weitere Parameter in die Änderung des Konfidenzwertes der Objekte einfließen lassen kann, wie beispielsweise den zeitlichen Verlauf. Mit anderen Worten, wenn beispielsweise in den letzten 10 übertragenen Daten ein Objekt vorhanden war, welches nicht in der digitalen Straßenkarte des Backends vorhanden ist, kann es sich um ein neues Objekt handeln, welches zu der digitalen Straßenkarte hinzugefügt werden sollte. Gleich kann es sich mit einem Objekt verhalten, welches aus der digitalen Straßenkarte entfernt werden sollte, wurde beispielsweise ein Objekt in den letzten 10 übertragenen Daten nicht erkannt, ohne das eine Verdeckung bestand, kann das Objekt aus der digitalen Straßenkarte entfernt werden, da es wahrscheinlich nicht mehr in der Realität vorhanden ist, obwohl der Konfidenzwert noch hoch sein kann. Mit anderen Worten kann die neueste Erkennung bzw. nicht Erkennung des Objekts den Konfidenzwert stärker beeinflussen als ältere Erkennungen. Alternativ oder zusätzlich können die Konfidenzwerte mit der Zeit abnehmen, wenn diese nicht durch neue Erkennungen bestätigt werden.

Unter dem Begriff "digitale Straßenkarten" oder "digitale Karten" sind auch Straßenkarten für fortschrittliche Fahrerassistenzsysteme (ADAS, Advanced Driver Assistance System) zu verstehen, ohne dass eine Navigation stattfindet. Insbesondere können diese digitalen Straßenkarten in einem Backend gespeichert und erstellt werden.

Ein Objekt kann hierbei beispielsweise ein Verkehrszeichen, eine Leitplanke, eine Straßenmarkierung, eine Lichtsignalanlage, ein Kreisel, ein Zebrastreifen oder ein Geschwindigkeitshügel sein.

Die Sende-/ Empfangseinheit kann die Daten an das Backend kabellos, über die Luft (over the air), übertragen. Die kabellose Übertragung bzw. der kabellose Empfang der Daten kann per Bluetooth, WLAN (z. B. WLAN 802.11a/b/g/n/ac oder WLAN 802.11p), ZigBee oder WiMax oder aber auch mittels zellulärer Funksysteme wie GPRS, UMTS, LTE oder 5G erfolgen. Es ist auch die Verwendung anderer Übertragungsprotokolle möglich. Die genannten Protokolle bieten den Vorteil der bereits erfolgten Standardisierung.

Unter Backend kann eine Recheneinheit verstanden werden, welche sich außerhalb des eigenen Fahrzeugs befindet, und welche für eine Vielzahl an Fahrzeugen oder Objekterkennungsvorrichtungen zur Verfügung steht. Das Backend kann beispielsweise ein Server oder eine Cloud sein, welche über das Internet oder ein anderes Netzwerk erreichbar ist.

Es sei angemerkt, dass einige Schritte durch die Objekterkennungsvorrichtung für das Fahrzeug und einige Schritte im Backend ausgeführt werden können. Ferner kann die Verteilung zwischen der Auswertung durch die Auswerteeinheit der Objekterkennungsvorrichtung und dem Backend dem jeweiligen Anwendungsfall angepasst werden. Auch kann gemäß einer Ausführungsform der Erfindung die komplette Auswertung im Backend durchgeführt werden. Die Objekterkennungsvorrichtung des Fahrzeugs dient in diesem Fall als Datenerfassungseinheit für das Backend. Jedoch kann die Auswertung auch auf den Objekterkennungsvorrichtungen ausgeführt werden und das Ergebnis wird anschließend an das Backend übertragen bzw. übermittelt und in diesem werden die Daten der einzelnen Fahrzeuge zusammengeführt, sodass die digitale Straßenkarte mit entsprechenden Konfidenzwerten für jedes Objekt in der digitalen Straßenkarte, z. B. Verkehrsschilder, entsteht.

Gemäß einer Ausführungsform der Erfindung ist die Auswerteeinheit dazu eingerichtet, die Umfelddaten eines vom Fahrzeug zurückgelegten Abschnitts einer Wegstrecke auszuwerten. Die Sende-/Empfangseinheit ist dazu eingerichtet, die Daten des gesamten Abschnitts gleichzeitig an das Backend zu übertragen.

Mit anderen Worten, kann die Objekterkennungsvorrichtung im Fahrzeug erst die Daten für einen bestimmten Abschnitt sammeln und auswerten und anschließend das Ergebnis für den gesamten Abschnitt an das Backend übertragen.

Alternativ oder zusätzlich kann bei der abschnittsweisen Auswertung, der Abschnitt kann auch als Snippet bezeichnet werden, die Erkennung (Sichtbarkeit) bzw. die Verdeckung (Nichtsichtbarkeit) um einen Wahrscheinlichkeitswert der richtigen Erkennung erweitert werden. Dieser steigt an, wenn in möglichst vielen einzelnen Bildern (Frames) des Abschnitts das Objekt erkannt wurde oder es verdeckt ist. Somit können für die Erkennung bzw. Verdeckung nicht nur diskrete Werte wie 0 (Verdeckung) und 1 (Erkennung) vorkommen, sondern auch beliebige Werte dazwischen. Ferner können die jeweiligen Abschnitte auch mit einer bestimmen Überdeckung zueinander definiert werden, damit für den Anfang des jeweiligen Abschnitts auch mehrere Bilder (Frames) vorhanden sind und der Anfang nicht nur aus einem Bild bestehen. Alternativ oder zusätzlich können die Erkennungen in den Abschnitten normiert werden, sodass die Anzahl der Erkennungen durch die Anzahl der gesamten vorhandenen Bilder, welches das jeweilige Objekt erkennen konnten, geteilt wird.

Durch die abschnittsweise Übertragung der Daten an das Backend, kann die Auswertung von erkennbaren und verdeckten Bereichen auch komplett im Backend ausgeführt werden. Mit anderen Worten dient das Fahrzeug bzw. die Objekterkennungsvorrichtung in dem Fahrzeug als Datenerfassungseinheit und die Datenverarbeitung bzw. die Auswertung erfolgt im Backend. Somit wird nicht für jedes Objekt eine hochgenaue Position benötigt, sondern lediglich für den Beginn des Abschnitts. Die restliche Positionsbestimmung kann anhand der Bilddaten im Backend realisiert werden, wobei das Backend typischerweise eine höhere Rechenleistung aufweist als die Auswerteeinheit. Durch die abschnittsweise Übertragung müssen lediglich für den Beginn und das Ende des jeweiligen Abschnitts hochgenaue Positionsinformationen an das Backend übertragen werden und das Backend kann anschließend aus den erhaltenen Daten die jeweiligen Positionen, die Objekte und die Verdeckungen berechnen, bestimmen oder ermitteln.

Gemäß einer weiteren Ausführungsform der Erfindung ist der Abschnitt 100m lang.

Es sei angemerkt, dass auch jede beliebige andere Länge für den Abschnitt gewählt werden kann, wie z.B. 200m, 500m oder 1km. Ferner kann der Abschnitt abhängig von der Straße bzw. dem Umfeld angepasst werden, sodass der Abschnitt in einem urbanen Umfeld kürzer ist als in einem ruralen Umfeld oder auf einer Autobahn. Dies kann vorteilhaft sein, da in dem urbanen Umfeld typischerweise mehr Objekte in einer gleichen Abschnittslänge vorhanden sind. Ferner kann der Abschnitt auch anhand einer festen Dateigröße definierte werden, z.B. 5MB, 25MB oder 1GB, aber der Abschnitt bzw. die Länge des Abschnitts kann auch anhand einer Kombination der vorgenannten Kriterien definiert werden.

Gemäß einer Ausführungsform der Erfindung ist die Auswerteeinheit dazu eingerichtet, in dem jeweiligen Abschnitt zunächst sämtliche erfassten Umfeld-Bereiche um das Fahrzeug als verdeckte Bereiche zu klassifizieren. Wenn ein Objekt in einem Umfeld-Bereich erkannt wurde oder in dem Umfeld-Bereich keine Verdeckung erkannt wurde, wird der entsprechenden Umfeld-Bereich als sichtbaren Bereich klassifiziert. Das Backend ist dazu eingerichtet, die verdeckten Umfeld-Bereiche nicht in die Bestimmung der Konfidenzwerte der einzelnen Objekte der digitalen Straßenkarte einzubeziehen.

Die Auswerteeinheit kann die erfassten Daten abschnittsweise, also für jeden Abschnitt bzw. Snippet, auswerten und an das Backend übertragen. Bei der Auswertung des Abschnitts kann auch derart vorgegangen werden, dass zunächst alle Bereiche als verdeckte Bereiche klassifiziert werden, also Bereiche in welchen eine Aussage über etwaige Objekte nicht möglich ist. Diese verdeckten Bereiche werden anschließend mittels der Auswertung durch die Auswerteeinheit nach und nach als erkannte Bereiche klassifiziert (erkannte Objekte oder erkannte Verdeckung) . Mit anderen Worten wird sukzessive der erkannte Bereich größer, je mehr Objekte darin erkannt wurden. Die nicht erkannten Bereiche bleiben als verdeckte Bereiche klassifiziert und ein Konfidenzwert von einem Objekt, welches sich eventuell in diesem Bereich befinden, wird nicht angepasst, da eine verlässliche Aussage aufgrund der Verdeckung oder dem nicht erkennen in diesem Bereich nicht möglich ist.

Gemäß einer Ausführungsform der Erfindung weist die Objekterkennungsvorrichtung ferner eine Speichereinheit auf. Diese Speichereinheit weist eine digitale Straßenkarte mit einer Vielzahl an Objekten auf. Die Auswerteeinheit ist ferner dazu eingerichtet, die erkannten Objekte mit den auf der Speichereinheit gespeicherten Objekten zu vergleichen. Die Auswerteeinheit ist dazu eingerichtet, erkannte Objekte, welche nicht in der digitalen Straßenkarte der Speichereinheit vorhanden sind, oder nicht erkannte Objekte, welche gemäß der digitalen Straßenkarte erkannt werden sollten, dem Backend zu melden.

Die Objekterkennungsvorrichtung kann ferner eine Speichereinheit aufweisen, auf welcher eine digitale Straßenkarte gespeichert ist. Des Weiteren kann die digitale Straßenkarte auf der Speicherkarte durch das Backend in regelmäßigen Abständen aktualisiert werden, sodass stets die aktuelle Version der digitalen Straßenkarte für die Auswerteeinheit der Objekterkennungsvorrichtung vorhanden ist. Ferner kann die Auswerteeinheit die erkannten Objekte mit den Objekten auf der digitalen Straßenkarte der Speichereinheit vergleichen. Die Auswerteeinheit kann anschließend erkannte oder nicht erkannte Objekte direkt dem Backend melden. Beispielsweise ist ein Objekt in der digitalen Straßenkarte vorhanden wurde, jedoch nicht von der Auswerteeinheit erkannt, somit kann der Konfidenzwert des Objekts im Backend reduziert werden. Wurde ein Objekt durch die Auswerteeinheit erkannt, welches in der digitalen Straßenkarte vorhanden ist, kann der Konfidenzwert des Objekts im Backend erhöht werden. Wurde ein Objekt durch die Auswerteeinheit erkannt, welches nicht in der digitalen Straßenkarte enthalten ist, kann das erkannte Objekt zu der digitalen Straßenkarte im Backend hinzugefügt werden.

Des Weiteren können bei der abschnittsweisen Auswertung der erfassten Daten die Daten in der Speichereinheit zwischengespeichert werden bis diese an das Backend übertragen werden.

Gemäß einer Ausführungsform der Erfindung ist die Positionierungseinheit ein GPS-Modul.

Weiterhin sei darauf hingewiesen, dass im Kontext der vorliegenden Erfindung GPS stellvertretend für sämtliche Globale Navigationssatellitensysteme (GNSS) steht, wie z.B. GPS, Galileo, GLONASS (Russland), Compass (China) oder IRNSS (Indien).

An dieser Stelle sei darauf hingewiesen, dass die Positionsbestimmung des Fahrzeugs auch über eine Zellpositionierung erfolgen kann. Dies bietet sich insbesondere bei der Verwendung von GSM-, UMTS-, LTE- oder 5G Netzen an.

Gemäß einer Ausführungsform der Erfindung sind die Umfelddaten Kamerabilder, Kamerabilder einer Stereokamera, Laserbilder, Lidarbilder oder Ultraschallaufnahmen.

Gemäß einer Ausführungsform der Erfindung ist die digitale Straßenkarte für ein Fahrzeug bzw. für die Navigation eines Fahrzeugs bestimmt.

Die im Backend erstellte digitale Straßenkarte kann für ein Fahrzeug bestimmt sein, um eine Navigation für dieses zu ermöglichen. Insbesondere bei hoch- oder vollautomatisierten Fahrzeugen ist eine präzise und aktuelle digitale Straßenkarte unerlässlich.

Gemäß einer Ausführungsform der Erfindung ist das Backend dazu eingerichtet, die digitale Straßenkarte in periodischen, zeitlichen Abständen an die Speichereinheit der Objekterkennungsvorrichtung zu übertragen.

Mit anderen Worten kann das Backend die dort erzeugte, aktualisierte, geänderte und/oder verbesserte digitale Straßenkarte in bestimmten Abständen wieder an die Objekterkennungsvorrichtung des Fahrzeugs bzw. der Fahrzeuge übertragen, sodass die Auswerteeinheit der Objekterkennungsvorrichtung ihrerseits wieder den aktuellen Stand der digitalen Straßenkarte zur Verfügung hat. Diese periodischen Abstände können beispielsweise einmal im Monat, jeden Tag oder einmal im Jahr sein. Ferner kann das Backend die digitale Straßenkarte auch bedarfsgerecht an das Fahrzeug übertragen, beispielsweise, wenn eine Navigation auf dem Fahrzeug gestartet wurde.

Gemäß einer weiteren Ausführungsform der Erfindung, ist das Backend dazu eingerichtet, nur Objekte mit einem Konfidenzwert oberhalb einem vordefinierten Schwellwert an die Speichereinheit der Objekterkennungsvorrichtung zu übertragen.

Mit anderen Worten können Objekte in die digitale Straßenkarte aufgenommen und an die Objekterkennungsvorrichtung übertragen werden, wenn der Konfidenzwert der Objekte der digitalen Straßenkarte auf dem Backend einen vordefinierten Schwellwert überschreiten, z.B. einen Konfidenzwert von über 90% aufweisen. Dies kann dazu dienen, dass nur Objekte an das Fahrzeug übertragen werden, welche mit sehr hoher Wahrscheinlichkeit vorhanden sind. Gemäß einer Ausführungsform der Erfindung, ist das Backend dazu eingerichtet, die empfangenen Daten auszuwerten und nicht erkannte Objekte oder neue Objekte in die digitale Straßenkarte des Backends basierend auf den empfangenen Daten zu entfernen zu integrieren bzw. hinzuzufügen.

Mit anderen Worten kann das Backend die digitale Straßenkarte basierend auf den empfangenen Daten von der Sende-/ Empfangseinheit der Objekterkennungsvorrichtung ändern, aktualisieren und gegebenenfalls neue Objekte hinzufügen oder alte Objekte entfernen, sodass stets eine aktuelle digitale Stra-βenkarte auf dem Backend vorhanden ist, welche die aktuellen Straßenverhältnisse repräsentiert. Ferner kann das Backend die genaue Position der einzelnen Objekte in der digitalen Stra-βenkarte basierend auf den empfangenen Daten aktualisieren, beispielsweise da durch eine steigende Anzahl an Erkennungen des jeweiligen Objekts die Position im Mittel durch die einzelnen Objekterkennungsvorrichtungen genauer bestimmt werden kann. Gemäß einer Ausführungsform der Erfindung sind die von der Sende-/ Empfangseinheit übertragenen Daten Vektordaten.

Um die übertragenen Datenmenge zwischen Objekterkennungsvorrichtung und Backend klein bzw. gering zu halten, können die Daten als Vektordaten übertragen werden, also kann die Information über die Existenz eines Objekts und dessen Position und nicht die gesamten Bilddaten übertragen werden.

In diesem Dokument wird auch, nicht unter die Erfindung fallend, ein Fahrzeug mit einer Objekterkennungsvorrichtung beschrieben. Die Objekterkennungsvorrichtung weist eine Erfassungseinheit, eine Auswerteeinheit, eine Positionierungseinheit und eine Sende-/ Empfangseinheit auf. Die Erfassungseinheit ist dazu eingerichtet, Umfelddaten von einem Fahrzeug zu erfassen. Die Positionierungseinheit ist dazu eingerichtet, die Position der erfassten Umfelddaten und der darin enthaltenen Objekte zu bestimmen. Die Auswerteeinheit ist dazu eingerichtet, die von der Erfassungseinheit erfassten Umfelddaten auszuwerten und Objekte und Verdeckungen der Objekte in den Umfelddaten zu erkennen sowie diese mit Positionsinformationen zu versehen. Die Sende-/ Empfangseinheit ist dazu eingerichtet, die von der Auswerteeinheit ausgewerteten Daten an ein Backend zu übertragen.

Bei dem Fahrzeug handelt es sich beispielsweise um ein Kraftfahrzeug, wie Auto, Bus oder Lastkraftwagen, oder aber auch um ein Schienenfahrzeug, ein Schiff, ein Luftfahrzeug, wie Helikopter oder Flugzeug, oder beispielsweise um ein Fahrrad. Ein weiterer Aspekt der Erfindung betrifft ein Backend mit einer digitalen Straßenkarte und Konfidenzwerten für deren Objekte wie in Anspruch 10 definiert.

Mit anderen Worten kann das Backend Daten von einer Objekterkennungsvorrichtung eines Fahrzeugs empfangen. Die in den Daten enthaltenen Objekte oder Verdeckungen kann das Backend dazu nutzen die Konfidenzwerte der Objekte in der digitalen Stra-βenkarte zu ändern. Es sei angemerkt, dass die Objekterkennungsvorrichtung hierbei eine Auswertung durchführen kann bevor die Daten an das Backend gesendet werden oder aber die Objekterkennungsvorrichtung sendet alle durch die Erfassungseinheit erfassten Daten an das Backend und die Auswertung der Daten erfolgt (größtenteils) im Backend. Mit anderen Worten kann die Erfassungseinheit Umfelddaten eines Fahrzeugs erfassen, diese können anschließend durch die Auswerteeinheit der Objekterkennungsvorrichtung oder durch das Backend ausgewertet werden. Hierbei können die Daten von der Objekterkennungsvorrichtung kontinuierlich oder abschnittsweise an das Backend übertragen werden.

Die Daten der Objekterkennungsvorrichtung können eine Mehrzahl an verschiedenen Objekten oder Verdeckungen von Objekten enthalten. Basierend auf diesen Objekten oder Verdeckungen von Objekten kann das Backend die Konfidenzwerte der in der digitalen Straßenkarte enthaltenen Objekte auf dem Backend ändern. Hierbei kann beispielsweise ein Konfidenzwert eines Objekts in der digitalen Straße erhöht werden, wenn das Objekt in den Daten der Objekterkennungsvorrichtung enthalten ist. Des Weiteren kann ein neues Objekt zu der digitalen Straßenkarte hinzugeführt werden, wenn ein Objekt in den Daten der Objekterkennungsvorrichtung enthalten ist, jedoch in der digitalen Straßenkarte bis jetzt kein Objekt an dieser Position vorhanden war. Somit können neue Objekte zu der digitalen Straßenkarte auf dem Backend hinzugefügt werden und die digitale Straßenkarte kann stets auf dem aktuellen Stand gehalten werden. Ferner kann das Backend den Konfidenzwert eines Objektes verringern bzw. reduzieren, wenn ein in der digitalen Straßenkarte enthaltenes Objekt nicht durch die Objekterkennungsvorrichtung erkannt wurde. Diese Reduzierung des Konfidenzwertes kann nicht durchgeführt werden, wenn die Objekterkennungsvorrichtung eine Verdeckung in dem Bereich des Objekts erkennt. Mit anderen Worten konnte die Erfassungseinheit der Objekterkennungsvorrichtung gar kein Objekt erkennen, da dieses Verdeckt war, erfolgt keine Anpassung des Konfidenzwertes, da keine definitive Aussage getroffen werden kann.

Das Backend kann ferner ein Objekt aus der digitalen Straßenkarte entfernen, wenn der Konfidenzwert dieses Objekts unter einen vordefinierte Schwellwert fällt, z.B. 60%, oder wenn durch eine vordefinierte Anzahl an Fahrzeugen in der letzten Zeit das Objekt nicht erkannt wurde. Somit können "alte" Objekte, welche in der Realität nicht mehr vorhanden sind, aus der digitalen Stra-βenkarte entfernt werden.

Bei der Auswertung der Daten durch die Auswerteeinheit der Objekterkennungsvorrichtung kann die Objekterkennungsvorrichtung dem Backend direkt ein nicht erkanntes Objekt, also ein Objekt welches hätte erkannt werden sollen aber nicht erkannt wurde, melden. Hierzu wird jedoch eine digitale Straßenkarte als Vergleich in der Objekterkennungsvorrichtung benötigt, diese kann beispielsweise auf einer Speichereinheit gespeichert sein. Auch neu erkannte Objekte, also welche bis jetzt nicht in der digitalen Straßenkarte der Objekterkennungsvorrichtung vorhanden waren, können dem Backend gemeldet werden.

Ferner können nicht nur die Konfidenzwerte der Objekte, also ob ein Objekt vorhanden ist oder nicht, angepasst bzw. geändert werden, sondern auch dessen genaue Position, also wo sich das Objekt befindet sowie dessen Inhalt, insbesondere bei wechselnden und dynamischen Anzeigetafeln. Je mehr Objekterkennungsvorrichtung ein Objekt erkennen und dessen Position bestimmen, desto genauer kann die "richtige" Position des realen Objekts bestimmt werden. Ferner kann auch um das jeweilige Objekt eine Wahrscheinlichkeitsdichtefunktion für die richtige Position bestimmt werden.

Es sei angemerkt, dass das Backend von einer Vielzahl an Objekterkennungsvorrichtungen von verschiedenen Fahrzeugen gleichzeitig Daten empfangen und verarbeiten kann. Somit können die jeweiligen Objekterkennungsvorrichtungen der Fahrzeuge als Sensoren genutzt werden, um die digitale Straßenkarte auf dem Backend auf dem aktuellen Stand zu halten, zu aktualisieren oder zu ändern und neue Objekte hinzuzufügen oder alte Objekte zu löschen. Ferner kann die aktuelle digitale Straßenkarte durch das Backend wieder an die Objekterkennungsvorrichtungen der Fahrzeuge übertragen werden, sodass diese immer die aktuelle digitale Straßenkarte zur Verfügung haben.

Ein weiterer Aspekt der Erfindung betrifft ein Verfahren zur Erzeugung von Konfidenzwerten für Objekte in einer digitalen Straßenkarte, folgende Schritte aufweisend:
- Erfassen von Umfelddaten durch eine Erfassungseinheit;
- Bestimmen der Position der erfassten Umfelddaten und der darin enthaltenen Objekte;
- Auswerten der erfassten Umfelddaten;
- Erkennen von Objekten und Verdeckungen von Objekten in den Umfelddaten;
- Versehen der erkannten Objekte und der Verdeckungen der Objekte mit Positionsinformationen;
- Übertragen der ausgewerteten Daten von einer Sende-/ Empfangseinheit an ein Backend;
- Erzeugen oder Aktualisieren der digitalen Straßenkarte des Backends basierend auf den empfangenen Daten;
- Erhöhen des Konfidenzwertes des jeweiligen Objekts, wenn das jeweilige Objekt in den empfangenen Daten enthalten ist;
- Reduzieren des Konfidenzwertes des jeweiligen Objekts, wenn das jeweilige Objekt nicht in den empfangenen Daten enthalten ist, wobei bei einer Verdeckung des Objekts in den empfangenen Daten keine Reduktion des jeweiligen Objektes durchführt.

Es sei angemerkt, dass die Schritte des Verfahrens auch in einer anderen Reihenfolge oder gleichzeitig ausgeführt werden können. Ferner kann zwischen einzelnen Schritten auch eine längere Zeitspanne liegen.

Ein weiterer Aspekt der Erfindung betrifft Programmelemente, die, wenn sie auf eine Auswerteeinheit und einem Backend eines Objektkonfidenzwerterzeugungssystems ausgeführt werden, die Auswerteeinheit und das Backend anleiten, das vorhergehend und nachfolgend beschriebene Verfahren durchzuführen.

Ein weiterer Aspekt der Erfindung betrifft computerlesbare Medien nach Anspruch 13.

Weitere Merkmale, Vorteile und Anwendungsmöglichkeiten der Erfindung ergeben sich aus der nachfolgenden Beschreibung der Ausführungsbeispiele und der Figuren.

Die Figuren sind schematisch und nicht maßstabsgetreu. Sind in der nachfolgenden Beschreibung der Figuren gleiche Bezugszeichen angegeben, so bezeichnen diese gleiche oder ähnliche Elemente.
Fig. 1 zeigt ein Blockdiagramm eines Objektkonfidenzwerterzeugungssystems gemäß einer Ausführungsform der Erfindung.
Fig. 2 zeigt eine schematische Darstellung von Umfelddaten mit einem erkannten Objekt gemäß einer Ausführungsform der Erfindung.
Fig. 3 zeigt eine schematische Darstellung von Umfelddaten mit einer Verdeckung gemäß einer Ausführungsform der Erfindung.
Fig. 4 eine schematische Darstellung einer Fahrzeugtrajektorie mit einer abschnittsweisen Auswertung der Umfelddaten gemäß einer Ausführungsform der Erfindung.
Fig. 5 zeigt ein Fahrzeug mit einer Objekterkennungsvorrichtung.
Fig. 6 zeigt ein Flussdiagramm für ein Verfahren zur Erzeugung von Konfidenzwerten für Objekte in einer digitalen Karte im Backend gemäß einer Ausführungsform der Erfindung.

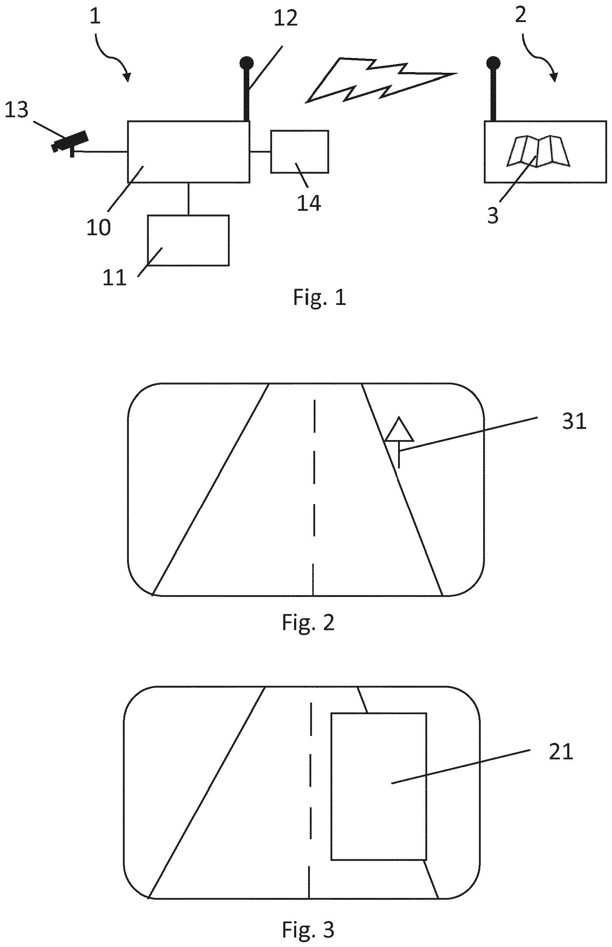

Fig. 1 zeigt ein Blockdiagramm eines Objektkonfidenzwerterzeugungssystem. Das Objektkonfidenzwerterzeugungssystem weist eine Objekterkennungsvorrichtung 1 und ein Backend 2 auf. Die Objekterkennungsvorrichtung 1 weist ihrerseits eine Auswerteeinheit 10, eine Positionierungseinheit 11, eine Sende-/ Empfangseinheit 12, eine Erfassungseinheit 13 und eine Speichereinheit 14 auf. Die Objekterkennungsvorrichtung 1 und das Backend 2 können miteinander Daten austauschen, dies kann beispielsweise drahtlos über Mobilfunknetze geschehen. Auf dem Backend 2 kann eine digitale Straßenkarte 3 vorhanden sein, welche mit Daten der Objekterkennungsvorrichtung aktualisiert, geändert oder erzeugt wird. Ferner kann das Backend 2 Daten, wie die aktuelle digitale Straßenkarte 3, an die Objekterkennungsvorrichtung 1 übertragen. Für den Datenaustausch kann insbesondere die Sende-/ Empfangseinheit 12 der Objekterkennungsvorrichtung 1 genutzt werden. Die Erfassungseinheit 13 kann dazu eingerichtet sein, Umfelddaten zu erfassen, insbesondere kann die Erfassungseinheit Umfelddaten eines Fahrzeugs mittels verschiedener Sensoren erfassen. Die Erfassungseinheit 13 kann beispielsweise eine Kamera, eine Stereokamera, ein Lidar-, ein Radar-, ein Ultraschallsensor oder eine Kombination aus diesen sein. Die Erfassungseinheit 13 kann zeitlich aufeinanderfolgende Umfelddaten erfassen, z.B. ein Video oder mehrere einzelne aufeinanderfolgende Bilder (Frames) . Die Positionierungseinheit 11 kann dazu eingerichtet sein, die Position der Objekterkennungsvorrichtung 1 und von durch die Erfassungseinheit 13 erfassten Objekten und Verdeckungen zu bestimmen. Beispielsweise kann die Positionierungseinheit 11 ein GPS-Sensor sein. Die Speichereinheit 14 kann eine digitale Straßenkarte aufweisen und ferner kann die Speichereinheit als Zwischenspeicher genutzt werden, wenn eine Übertragung an das Backend abschnittsweise erfolgt. Die Auswerteeinheit 10 der Objekterkennungsvorrichtung 1 kann dazu eingerichtet sein, Objekte oder Verdeckungen in den erfassten Umfelddaten zu erkennen und mit einer Position zu versehen. Ein Objekt kann hierbei beispielsweise ein Verkehrszeichen, eine Leitplanke, eine Straßenmarkierung, eine Lichtsignalanlage, ein Kreisel, ein Zebrastreifen oder ein Geschwindigkeitshügel sein. Ferner kann die Ausweiteeinheit 10 eine Verdeckung erkennen, also eine Einrichtung, z.B. ein LKW oder ein Baum, welche das zu erfassende Objekt verdeckt, sich also zwischen dem zu erkennenden Objekt und der Erfassungseinheit 13 befindet. Somit kann kein Objekt erkannt werden, da das Objekt erst gar nicht durch die Erfassungseinheit 13 erfasst wurde. Ferner kann die Auswerteeinheit 10 dazu eingerichtet sein, die erfassten und erkannten Objekte mit den in der Speichereinheit 14 gespeicherten Objekten zu vergleichen, sodass die Auswerteeinheit 10 feststellen kann, ob ein Objekt erkannt wurde, welches nicht in der digitalen Straßenkarte der Speichereinheit 14 vorhanden ist, oder dass ein Objekt gemäß der auf der Speichereinheit 14 gespeicherten digitalen Straßenkarte hätte vorhanden sein sollen aber durch die Auswerteeinheit 10 nicht erkannt wurde. Diese erkannten bzw. nicht erkannten Objekte kann die Objekterkennungsvorrichtung 1 dem Backend 2 direkt melden. Mit anderen Worten kann die Auswertung durch die Auswerteeinheit 10 erfolgen und das Ergebnis wird an das Backend 2 gesendet, um dort die digitale Straßenkarte 3 dementsprechend anzupassen oder zu aktualisieren. Es sei angemerkt, dass die Auswertung auch im Backend 2 erfolgen kann, dazu sendet die Objekterkennungsvorrichtung 1 alle erfassten Umfelddaten der Erfassungseinheit 13 an das Backend 2 und das Backend 2 wertet die Daten aus. Somit kann Rechenleistung auf der Objekterkennungsvorrichtung 1 gespart werden.

Gemäß einer Ausführungsform der Erfindung kann die Auswertung der Umfelddaten abschnittsweise, also in festen Abschnitten, von z.B. 100m, erfolgen, wobei die einzelnen Abschnitte als Snippets bezeichnet werden können. Ferner kann die Auswerteeinheit 10 dazu eingerichtet sein, zunächst alles als verdeckte Bereiche zu klassifizieren und sukzessive, wenn Objekte erkannt wurden, in erfasste Bereiche zu klassifizieren, sodass alle nicht sicher erkannten Bereiche als Verdeckungen gelten und dort keine Aussage über die dort befindlichen Objekte getroffen werden kann, also der Konfidenzwert dieser Objekte wird in diesem Fall nicht aktualisiert bzw. angepasst. Dieses Vorgehen kann insbesondere bei dem abschnittsweisen Auswerten sinnvoll sein, da durch mehrere verschiedene Blickwinkel und Entfernungen ein Objekt über einen gewissen Zeitraum bzw. über eine gewisse Distanz erfasst werden kann.

Es sei angemerkt, dass die einzelnen Abschnitte bzw. Snippets direkt aneinander anschließen können, jedoch können diese auch jeweils einen überlappenden Bereich aufweisen, sodass auch zu Beginn eines jeweiligen Abschnitts schon Informationen von mehreren Blickwinkeln und Entfernungen vorliegt.

Ferner können in einem Abschnitt auch Mehrfacherkennungen eines Objekts die Wahrscheinlichkeit, also den Konfidenzwert, einer korrekten Erfassung erhöhen. Beispielsweise kann es möglich sein einen Faktor für jedes Objekt in einem jeweiligen Abschnitt zu bestimmen, welcher die Korrektheit der Erkennung des Objekts wiederspiegelt. Hierzu kann dieser Faktor beispielsweise zwischen 0 und 1 liegen, wobei 1 bedeutet, dass das Objekt in allen zeitlich aufeinanderfolgenden Umfelddaten durch die Auswerteeinheit 10 erfasst und erkannt wurde. Mit anderen Worten kann der Faktor die Anzahl an Erkennungen eines Objekts in den Umfelddaten eines Abschnitts durch die gesamte Anzahl an zur Verfügung stehender Umfelddaten sein. Beispielsweise besteht ein Abschnitt aus 1000 einzelnen Bildern oder Frames und ein bestimmtes Objekt wurde in 850 dieser Bilder erkannt, somit kann der Faktor zu 0,85 bestimmt werden. Alternativ oder zusätzlich kann der Faktor auch als Anzahl an Erkennungen des jeweiligen Objekts bezogen auf die Anzahl der möglichen Erkennungen sein. Beispielsweise kann die Position des Objekts in der Mitte eines Abschnitts liegen, sodass das Objekt nur durch die Hälfte der zur Verfügung stehenden Umfelddaten erfasst werden konnte, z.B. der Abschnitt besteht aus 1000 einzelnen Bildern, aber das Objekt konnte aufgrund seiner Position nur in 500 Bildern bzw. Frames vorhanden sein und das Objekt wurde auf 460 dieser 500 Bilder erkannt, somit kann der Faktor zu 0,92 bestimmt werden. Mit anderen Worten ist das jeweilig Objekt auf 92% der Umfelddaten vorhanden.

Diese ausgewerteten Daten mit den jeweiligen Faktoren können an das Backend 2 übertragen werden, das Backend 2 wiederum kann basierend auf diesen Daten den Konfidenzwert des jeweiligen Objekts in der digitalen Straßenkarte 3 anpassen, ändern oder aktualisieren.

Die Übertragung der Daten durch die Sende-/ Empfangseinheit 12 an das Backup 2 kann sowohl kontinuierlich als auch abschnittweise, in Snippets, erfolgen.

Fig. 2 zeigt ein beispielhaftes Bild der Umfelddaten. Hierbei ist eine Straße dargestellt. Am Rand dieser Straße befindet sich ein Verkehrszeichen, welches durch die Auswerteeinheit oder durch das Backend als Objekt 31 erkannt wird. Dieses Bild bzw. die Position des erkannten Objektes 31 kann an das Backend übertragen werden, welches wiederum den Konfidenzwert von diesem Objekt in der digitalen Straßenkarte in dem Backend entsprechend erhöht.

Fig. 3 zeigt ebenfalls ein beispielhaftes Bild der Umfelddaten, jedoch wird hierbei das Objekt durch eine Verdeckung 21 verdeckt. Somit kann durch die Auswerteeinheit oder das Backend an dieser Position kein Objekt erkannt werden. Mit anderen Worten verhindert die Verdeckung eine Erkennung des Objekts . Die Verdeckung kann beispielsweise durch ein anderen Verkehrsteilnehmen, wie einen LKW, oder durch einen Baum entstehen. Befindet sich ein zu erkennendes Objekt hinter einer Verdeckung, wird der Konfidenzwert dieses Objekts nicht angepasst, da keine Aussage über das Objekt getroffen werden kann.

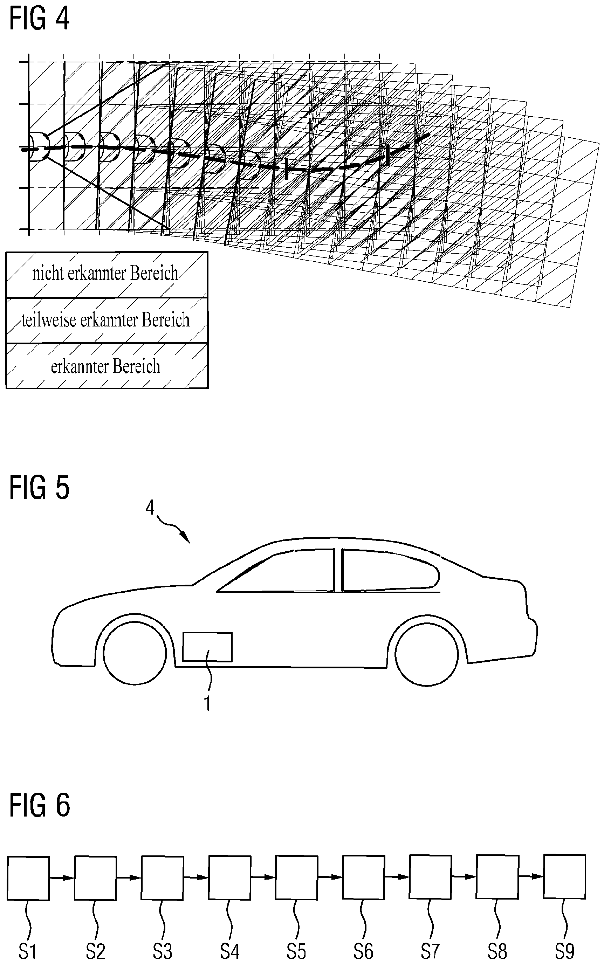

Fig. 4 einen Verlauf eines Fahrzeugs 4 über eine gewisse Zeit entlang eines bestimmen Weges. Dieser Weg wird in Fig. 4 durch die gestrichelte schwarze Linie dargestellt. Ferner symbolisieren die mehreren dargestellten Fahrzeuge 4 den Verlauf des einen Fahrzeugs 4 entlang dieses Weges. Der Weg kann hierbei in mehrere Abschnitte 5 (Snippets) aufgeteilt sein. Die unterschiedlichen Abschnitte 5 werden in der Fig. 4 durch die dicken senkrechten Balken quer zur Richtung des Weges dargestellt. Die Abschnitte 5 können einen festen Abstand aufweisen, z.B. 100m. Die Erfassungseinheit der Objekterkennungsvorrichtung des Fahrzeugs 4 weist jeweils einen bestimmen Blickwinkel auf. In der Fig. 4 sind links, rechts und vor dem Fahrzeug 4 Bereiche in unterschiedlichen Grautönen dargestellt, diese symbolisieren die Bereiche der Umfelddaten des Fahrzeugs 4, welche durch die Objekterkennungsvorrichtung erkannt wurden und welche nicht. Ein hellgrauer Bereich symbolisiert einen nicht erkannten Bereich und ein dunkelgrauer Bereich einen durch die Objekterkennungsvorrichtung erkannten Bereich. Es sei angemerkt, dass je weiter fortgeschritten das Fahrzeug 4 auf dem Weg ist, desto höher ist die Wahrscheinlichkeit, dass der Bereich erkannt wurde, da die Objekterkennungsvorrichtung viele einzelne Bilder bzw. Frames aufgenommen hat, in welcher der Bereich erkennbar war.

Zu Beginn des Weges kann die Erfassungseinheit nur die Objekte vor dem Fahrzeug erkennen und die seitlichen nur teilweise, je weiter sich das Fahrzeug entlang des Weges bewegt, desto öfter hat die Objekterkennungsvorrichtung die Chance ein Objekt im Fahrzeugumfeld zu erkennen bzw. desto öfter wurde ein Objekt oder eine Verdeckung erkannt, sobald eine Erkennung erfolgt ist, werden die als erkannt klassifiziert. Zwischen einem nicht erkannten Bereich und einem erkannten Bereich kann der Bereich auch teilweise durch die Objekterkennungsvorrichtung erkannt worden sein bzw. nur in wenigen Bilddaten bzw. Frames erkannt worden sein.

Vorteilhafterweise können alle Bereiche zunächst als nicht erkannte Bereiche klassifiziert werden und sobald eine Erkennung stattfindet kann dieser Bereich als erkannter Bereich klassifiziert werden. Des Weiteren kann der Konfidenzwert des erkannten Bereichs mit zunehmenden Erkennungen in einer Mehrzahl an Bildern oder Frames erhöht werden, dies wird durch ein zunehmend intensiven Grauwert in Fig. 4 dargestellt.

Fig. 5 zeigt ein Fahrzeug 4 mit einer Objekterkennungsvorrichtung 1. Diese Objekterkennungsvorrichtung 1 kann Umfelddaten um das Fahrzeug 4 erfassen und Objekte und Verdeckungen darin erkennen. Ferner kann die Objekterkennungsvorrichtung 1 die ausgewerteten Daten an das Backend übertragen. Des Weiteren können eine Vielzahl von Fahrzeugen 4 mit einer Objekterkennungsvorrichtung 1 Umfelddaten erfassen und auswerten und an das Backend übertragen.

Fig. 6 zeigt ein Flussdiagramm für ein Verfahren zur Erzeugung von Konfidenzwerten für Objekte in einer digitalen Straßenkarte. In einem ersten Schritt S1 können Umfelddaten durch eine Erfassungseinheit erfasst werden. Diese Umfelddaten können einzelne Bilder bzw. Frames oder ein ganzer Abschnitt von aufeinanderfolgenden Bildern bzw. Frames sein. In einem zweiten Schritt S2 kann die Positionsbestimmung der erfassten Umfelddaten und der darin enthaltenen Objekte erfolgen. Eine Auswertung der erfassten Umfelddaten kann in Schritt S3 erfolgen und in Schritt S4 können Objekte und Verdeckungen in den Umfelddaten erkannt werden. In Schritt S5 können die in Schritt S4 erkannten Objekte und Verdeckungen mit Positionsinformationen versehen werden. In Schritt S6 kann die Übertragung der ausgewerteten Daten an ein Backend mittels einer Sende-/ Empfangseinheit erfolgen. Anschließend kann in Schritt S7 die digitale Straßenkarte auf dem Backend basierend auf den empfangenen Daten erzeugt, geändert oder aktualisiert werden. In Schritt S8 kann ein Konfidenzwert eines jeweiligen Objekts erhöht werden, wenn das jeweilige Objekt in den empfangenen Daten enthalten ist. In Schritt S9 kann ein Konfidenzwert eines Objekts reduziert werden, wenn das Objekt nicht in den empfangenen Daten enthalten ist, außer das Objekt wurde von einer Verdeckung verdeckt, sodass es in den erfassten Umfelddaten nicht zu erkennen war.

## Patentansprüche

1. Objektkonfidenzwerterzeugungssystem zur Erzeugung von Konfidenzwerten für Objekte (31) in einer digitalen Straßenkarte (3), aufweisend:
- ein Backend (2); und
- eine Objekterkennungsvorrichtung (1) für ein Fahrzeug (4),
die Objekterkennungsvorrichtung (1) aufweisend:
- eine Erfassungseinheit (13);
- eine Auswerteeinheit (10);
- eine Positionierungseinheit (11); und
- eine Sende-/ Empfangseinheit (12),
wobei die Erfassungseinheit (13) dazu eingerichtet ist, Umfelddaten von einem Fahrzeug (4) zu erfassen,
wobei die Positionierungseinheit (12) dazu eingerichtet ist, die Position der erfassten Umfelddaten und der darin enthaltenen Objekte (31) zu bestimmen,
wobei die Auswerteeinheit (10) dazu eingerichtet ist, die Objekte (31) und Verdeckungen (21) der Objekte (31) in den Umfelddaten zu erkennen sowie diese mit Positionsinformationen zu versehen,
wobei die Sende-/ Empfangseinheit (12) dazu eingerichtet ist, die von der Auswerteeinheit (10) erzeugte Daten an das Backend (2) zu übertragen,
wobei das Backend (2) dazu eingerichtet ist, die Daten der Sende-/ Empfangseinheit (12) zu empfangen und die digitale Straßenkarte (3) zu erzeugen oder zu aktualisierten,
wobei jedes der Objekte (31) der digitalen Straßenkarte (3) des Backends (2) einen Konfidenzwert aufweist;
wobei das Backend (2) dazu eingerichtet ist, den Konfidenzwert des jeweiligen Objekts (31) zu erhöhen, wenn das jeweilige Objekt (31) in den empfangenen Daten enthalten ist, und
wobei das Backend (2) dazu eingerichtet ist, den Konfidenzwert des jeweiligen Objekts (31) zu reduzieren, wenn das jeweilig Objekt (31) nicht in den empfangenen Daten enthalten ist,
wobei das Backend (2) dazu eingerichtet ist, bei einer Verdeckung (21) des Objekts (31) in den empfangenen Daten keine Reduktion des Konfidenzwertes des jeweiligen Objektes (31) durchzuführen.

2. System gemäß Anspruch 1,
wobei die Auswerteeinheit (10) dazu eingerichtet ist, die Umfelddaten eines vom Fahrzeug (4) zurückgelegten Abschnitts (5) einer Wegstrecke auszuwerten, und
wobei die Sende-/Empfangseinheit (12) dazu eingerichtet ist, die Daten des gesamten Abschnitts (5) an das Backend (2) zu übertragen.

3. System gemäß Anspruch 2,
wobei der Abschnitt (5) 100m lang ist.

4. System gemäß einem der vorhergehenden Ansprüche,
wobei die Auswerteeinheit (10) dazu eingerichtet ist, in dem jeweiligen Abschnitt (5) zunächst sämtliche erfassten Umfeld-Bereiche um das Fahrzeug (4) als verdeckte Bereiche (21) zu klassifizieren und, wenn ein Objekt (31) in einem Umfeld-Bereich erkannt wurde oder in dem Umfeld-Bereich keine Verdeckung (21) erkannt wird, den entsprechenden Umfeld-Bereich als sichtbaren Bereich zu klassifizieren,
wobei das Backend (2) dazu eingerichtet ist, die verdeckten Umfeld-Bereiche nicht in die Bestimmung der Konfidenzwerte der einzelnen Objekte (31) der digitalen Straßenkarte (3) miteinzubeziehen.

5. System gemäß einem der vorhergehenden Ansprüche, die Objekterkennungsvorrichtung (1) ferner aufweisend:
- eine Speichereinheit (14),
wobei eine digitale Straßenkarte (3) mit einer Vielzahl an Objekten (31) auf der Speichereinheit (14) gespeichert ist,
wobei die Auswerteeinheit (10) dazu eingerichtet ist, die erkannten Objekte (31) mit den auf der Speichereinheit (14) gespeicherten Objekten (31) zu vergleichen,
wobei die Auswerteeinheit (10) ferner dazu eingerichtet ist, erkannte Objekte (31), welche nicht in der digitalen Straßenkarte (3) der Speichereinheit (14) vorhanden sind, oder nicht erkannte Objekte (31), welche gemäß der digitalen Straßenkarte (3) erkannt werden sollten, dem Backend (2) zu melden.

6. System gemäß einem der vorhergehenden Ansprüche,
wobei das Backend (2) dazu eingerichtet ist, die digitale Straßenkarte (3) in periodischen, zeitlichen Abständen an die Speichereinheit (14) der Objekterkennungsvorrichtung (1) zu übertragen.

7. System gemäß Anspruch 6,
wobei das Backend (2) dazu eingerichtet ist, nur Objekte (31) mit einem Konfidenzwert oberhalb einem vordefinierten Schwellwert an die Speichereinheit (14) der Objekterkennungsvorrichtung (1) zu übertragen.

8. System gemäß einem der vorhergehenden Ansprüche,
wobei das Backend (2) dazu eingerichtet ist, die empfangenen Daten auszuwerten und nicht erkannte Objekte (31) oder neue Objekte (31) in die digitale Straßenkarte (3) des Backends (2) basierend auf den empfangenen Daten zu entfernen bzw. zu integrieren .

9. System gemäß einem der vorhergehenden Ansprüche,
wobei die von der Sende-/ Empfangseinheit (12) übertragenen Daten Vektordaten sind.

10. Backend (2) mit einer digitalen Straßenkarte (3) und Konfidenzwerten für deren Objekte (31),
wobei das Backend (2) dazu eingerichtet ist, die Daten einer Sende-/ Empfangseinheit (12) eines Fahrzeugs (4) zu empfangen und die digitale Straßenkarte (3) zu erzeugen oder zu aktualisierten,
wobei das Fahrzeug (4) eine Objekterkennungsvorrichtung (1) umfasst, die Objekterkennungsvorrichtung (1) aufweisend:
- eine Erfassungseinheit (13);
- eine Auswerteeinheit (10);
- eine Positionierungseinheit (11); und
- die Sende-/ Empfangseinheit (12),
wobei die Erfassungseinheit (13) dazu eingerichtet ist, Umfelddaten vom Fahrzeug (4) zu erfassen,
wobei die Positionierungseinheit (11) dazu eingerichtet ist, die Position der erfassten Umfelddaten und der darin enthaltenen Objekte (31) zu bestimmen,
wobei die Auswerteeinheit (10) dazu eingerichtet ist, die Objekte (31) und Verdeckungen (21) der Objekte (31) in den Umfelddaten zu erkennen sowie diese mit Positionsinformationen zu versehen,
wobei die Sende-/ Empfangseinheit (12) dazu eingerichtet ist, die von der Auswerteeinheit (10) erzeugte Daten an das Backend (2) zu übertragen,
wobei jedes der Objekte (31) der digitalen Straßenkarte (3) des Backends (2) einen Konfidenzwert aufweist;
wobei das Backend (2) dazu eingerichtet ist, den Konfidenzwert des jeweiligen Objekts (31) zu erhöhen, wenn das jeweilige Objekt (31) in den empfangenen Daten enthalten ist, und
wobei das Backend (2) dazu eingerichtet ist, den Konfidenzwert des jeweiligen Objekts (31) zu verringern, wenn das jeweilig Objekt (31) nicht in den empfangenen Daten enthalten ist,
wobei das Backend (2) dazu eingerichtet ist, bei einer Verdeckung (21) des Objekts (31) in den empfangenen Daten keine Reduktion des Konfidenzwertes des jeweiligen Objektes (31) durchzuführen.

11. Verfahren zur Erzeugung von Konfidenzwerten für Objekte in einer digitalen Straßenkarte, folgende Schritte aufweisend:
- Erfassen (S1) von Umfelddaten durch eine Erfassungseinheit;
- Bestimmen (S2) der Position der erfassten Umfelddaten und der darin enthaltenen Objekte;
- Auswerten (S3) der erfassten Umfelddaten;
- Erkennen (S4) von Objekten und Verdeckungen von Objekten in den Umfelddaten;
- Versehen (S5) der erkannten Objekte und der Verdeckungen der Objekte mit Positionsinformationen;
- Übertragen (S6) der ausgewerteten Daten von einer Sende-/Empfangseinheit an ein Backend;
- Erzeugen (S7) oder Aktualisieren der digitalen Straßenkarte des Backends basierend auf den empfangenen Daten;
- Erhöhen (S8) des Konfidenzwertes des jeweiligen Objekts, wenn das jeweilige Objekt in den empfangenen Daten enthalten ist;
- Reduzieren (S9) des Konfidenzwertes des jeweiligen Objekts, wenn das jeweilige Objekt nicht in den empfangenen Daten enthalten ist, wobei bei einer Verdeckung des Objekts in den empfangenen Daten keine Reduktion des jeweiligen Objektes stattfindet.

12. Programmelemente, die, wenn sie auf eine Auswerteeinheit (10) und einem Backend (2) eines Objektkonfidenzwerterzeugungssystems gemäß Anspruch 1 ausgeführt werden, die Auswerteeinheit (10) und das Backend (2) anleiten, das Verfahren gemäß Anspruch 11 durchzuführen

13. Computerlesbare Medien, auf welchen die Programmelemente gemäß Anspruch 12 gespeichert sind.

## Claims

1. Object confidence value generation system for generating confidence values for objects (31) on a digital road map (3), having:
- a backend (2); and
- an object detection apparatus (1) for a vehicle (4),
the object detection apparatus (1) having:
- a capture unit (13);
- an evaluation unit (10);
- a positioning unit (11); and
- a transmission/reception unit (12),
wherein the capture unit (13) is configured to capture surroundings data from a vehicle (4),
wherein the positioning unit (12) is configured to determine the position of the captured surroundings data and of the objects (31) included therein,
wherein the evaluation unit (10) is configured to detect the objects (31) and maskings (21) of the objects (31) in the surroundings data and to provide them with position information,
wherein the transmission/reception unit (12) is configured to transmit the data generated by the evaluation unit (10) to the backend (2),
wherein the backend (2) is configured to receive the data of the transmission/reception unit (12) and to generate or update the digital road map (3), wherein each of the objects (31) on the digital road map (3) of the backend (2) has a confidence value;
wherein the backend (2) is configured to increase the confidence value of the respective object (31) if the respective object (31) is included in the received data, and
wherein the backend (2) is configured to reduce the confidence value of the respective object (31) if the respective object (31) is not included in the received data,
wherein the backend (2) is configured to respond to a masking (21) of the object (31) in the received data by not reducing the confidence value of the respective object (31).

2. System according to Claim 1,
wherein the evaluation unit (10) is configured to evaluate the surroundings data relating to a section (5) of a route through which the vehicle (4) has travelled, and wherein the transmission/reception unit (12) is configured to transmit the data relating to the whole section (5) to the backend (2).

3. System according to Claim 2,
wherein the section (5) is 100 m long.

4. System according to one of the preceding claims,
wherein the evaluation unit (10) is configured to initially classify all captured areas of the surroundings around the vehicle (4) in the respective section (5) as masked areas (21) and, if an object (31) has been detected in an area of the surroundings or no masking (21) is detected in the area of the surroundings, to classify the applicable area of the surroundings as a visible area,
wherein the backend (2) is configured not to involve the masked areas of the surroundings in the determination of the confidence values of the individual objects (31) on the digital road map (3).

5. System according to one of the preceding claims, the object detection apparatus (1) further having:
- a memory unit (14),
wherein a digital road map (3) containing a multiplicity of objects (31) is stored in the memory unit (14),
wherein the evaluation unit (10) is configured to compare the detected objects (31) with the objects (31) stored in the memory unit (14),
wherein the evaluation unit (10) is further configured to report detected objects (31) that are not present on the digital road map (3) in the memory unit (14), or undetected objects (31) that should be detected according to the digital road map (3), to the backend (2).

6. System according to one of the preceding claims,
wherein the backend (2) is configured to transmit the digital road map (3) to the memory unit (14) of the object detection apparatus (1) at periodic intervals of time.

7. System according to Claim 6,
wherein the backend (2) is configured to transmit only objects (31) having a confidence value above a predefined threshold to the memory unit (14) of the object detection apparatus (1).

8. System according to one of the preceding claims,
wherein the backend (2) is configured to evaluate the received data and to remove or integrate undetected objects (31) or new objects (31) from/in the digital road map (3) of the backend (2) on the basis of the received data.

9. System according to one of the preceding claims,
wherein the data transmitted by the transmission/reception unit (12) are vector data.

10. Backend (2) having a digital road map (3) and confidence values for the objects (31) thereof,
wherein the backend (2) is configured to receive the data of a transmission/reception unit (12) of a vehicle (4) and to generate or update the digital road map (3),
wherein the vehicle (4) comprises an object detection apparatus (1), the object detection apparatus (1) having:
- a capture unit (13);
- an evaluation unit (10);
- a positioning unit (11); and
- the transmission/reception unit (12),
wherein the capture unit (13) is configured to capture surroundings data from the vehicle (4),
wherein the positioning unit (11) is configured to determine the position of the captured surroundings data and of the objects (31) included therein,
wherein the evaluation unit (10) is configured to detect the objects (31) and maskings (21) of the objects (31) in the surroundings data and to provide them with position information,
wherein the transmission/reception unit (12) is configured to transmit the data generated by the evaluation unit (10) to the backend (2),
wherein each of the objects (31) on the digital road map (3) of the backend (2) has a confidence value;
wherein the backend (2) is configured to increase the confidence value of the respective object (31) if the respective object (31) is included in the received data, and
wherein the backend (2) is configured to reduce the confidence value of the respective object (31) if the respective object (31) is not included in the received data,
wherein the backend (2) is configured to respond to a masking (21) of the object (31) in the received data by not reducing the confidence value of the respective object (31).

11. Method for generating confidence values for objects on a digital road map, having the following steps:
- capturing (S1) surroundings data by way of a capture unit;
- determining (S2) the position of the captured surroundings data and of the objects included therein;
- evaluating (S3) the captured surroundings data;
- detecting (S4) objects and maskings of objects in the surroundings data;
- providing (S5) the detected objects and the maskings of the objects with position information;
- transmitting (S6) the evaluated data from a transmission/reception unit to a backend;
- generating (S7) or updating the digital road map of the backend on the basis of the received data;
- increasing (S8) the confidence value of the respective object if the respective object is included in the received data;
- reducing (S9) the confidence value of the respective object if the respective object is not included in the received data, a masking of the object in the received data resulting in no reduction for the respective object taking place.

12. Program elements that, when executed on an evaluation unit (10) and a backend (2) of an object confidence value generation system according to Claim 1, instruct the evaluation unit (10) and the backend (2) to carry out the method according to Claim 11.

13. Computer-readable media on which the program elements according to Claim 12 are stored.

## Revendications

1. Système de génération de valeurs de confiance d'objet permettant de générer des valeurs de confiance pour des objets (31) sur une carte routière numérique (3), présentant :
- un back-end (2) ; et
- un dispositif d'identification d'objet (1) pour un véhicule (4),
le dispositif d'identification d'objet (1) présentant :
- une unité de détection (13) ;
- une unité d'évaluation (10) ;
- une unité de positionnement (11) ; et
- une unité d'émission/réception (12),
dans lequel l'unité de détection (13) est conçue pour détecter des données d'environnement d'un véhicule (4),
dans lequel l'unité de positionnement (12) est conçue pour déterminer la position des données d'environnement détectées et des objets (31) contenus dans celles-ci,
dans lequel l'unité d'évaluation (10) est conçue pour identifier les objets (31) et des dissimulations (21) des objets (31) dans les données d'environnement et pour les munir d'informations de position,
dans lequel l'unité d'émission/réception (12) est conçue pour transmettre les données générées par l'unité d'évaluation (10) au back-end (2),
dans lequel le back-end (2) est conçu pour recevoir les données de l'unité d'émission/réception (12) et pour générer ou mettre à jour la carte routière numérique (3),
dans lequel chacun des objets (31) de la carte routière numérique (3) du back-end (2) présente une valeur de confiance ;
dans lequel le back-end (2) est conçu pour augmenter la valeur de confiance de l'objet respectif (31) si l'objet respectif (31) est contenu dans les données reçues, et
dans lequel le back-end (2) est conçu pour réduire la valeur de confiance de l'objet respectif (31) si l'objet respectif (31) n'est pas contenu dans les données reçues,
dans lequel, en cas de dissimulation (21) de l'objet (31) dans les données reçues, le back-end (2) est conçu pour ne pas procéder à une réduction de la valeur de confiance de l'objet respectif (31).

2. Système selon la revendication 1,
dans lequel l'unité d'évaluation (10) est conçue pour évaluer les données d'environnement d'un tronçon (5) d'un trajet parcouru par le véhicule (4), et
dans lequel l'unité d'émission/réception (12) est conçue pour transmettre les données du tronçon entier (5) au back-end (2).

3. Système selon la revendication 2, dans lequel le tronçon (5) mesure100 m.

4. Système selon l'une quelconque des revendications précédentes,
dans lequel sur le tronçon (5) respectif, l'unité d'évaluation (10) est conçue pour classifier d'abord toutes les zones d'environnement détectées autour du véhicule (4) comme des zones dissimulées (21), et lorsqu'un objet (31) a été identifié dans une zone d'environnement ou aucune dissimulation (21) n'a été identifiée dans la zone d'environnement, pour classifier la zone d'environnement correspondante comme une zone visible,
dans lequel le back-end (2) est conçu pour ne pas inclure les zones d'environnement dissimulées dans la détermination des valeurs de confiance des objets individuels (31) de la carte routière numérique (3).

5. Système selon l'une quelconque des revendications précédentes, le dispositif d'identification d'objet (1) présentant en outre :
- une unité de stockage (14),
dans lequel une carte routière numérique (3) avec une pluralité d'objets (31) est stockée sur l'unité de stockage (14),
dans lequel l'unité d'évaluation (10) est conçue pour comparer les objets identifiés (31) avec les objets stockés (31) sur l'unité de stockage (14),
dans lequel l'unité d'évaluation (10) est en outre conçue pour signaler au back-end (2) des objets identifiés (31) qui n'existent pas sur la carte routière numérique (3) de l'unité de stockage (14) ou des objets non identifiés (31) qui auraient dû être identifiés selon la carte routière numérique (3).

6. Système selon l'une quelconque des revendications précédentes,
dans lequel le back-end (2) est conçu pour transmettre la carte routière numérique (3) à intervalles de temps périodiques à l'unité de stockage (14) du dispositif d'identification d'objet (1).

7. Système selon la revendication 6,
dans lequel le back-end (2) est conçu pour transmettre à l'unité de stockage (14) du dispositif d'identification d'objet (1) uniquement des objets (31) ayant une valeur de confiance au-dessus d'une valeur seuil prédéfinie.

8. Système selon l'une quelconque des revendications précédentes,
dans lequel le back-end (2) est conçu pour évaluer les données reçues et pour retirer ou intégrer des objets non identifiés (31) ou de nouveaux objets (31) sur la carte routière numérique (3) du back-end (2) sur la base des données reçues.

9. Système selon l'une quelconque des revendications précédentes,
dans lequel les données transmises par l'unité d'émission/réception (12) sont des données vectorielles.

10. Back-end (2) comprenant une carte routière numérique (3) et des valeurs de confiance pour les objets (31) de celle-ci,
dans lequel le back-end (2) est conçu pour recevoir des données d'une unité d'émission/réception (12) d'un véhicule (4) et pour générer ou mettre à jour la carte routière numérique (3),
dans lequel le véhicule (4) comprend un dispositif d'identification d'objet (1), le dispositif d'identification d'objet (1) présentant :
- une unité de détection (13) ;
- une unité d'évaluation (10) ;
- une unité de positionnement (11) ; et
- l'unité d'émission/réception (12),
dans lequel l'unité de détection (13) est conçue pour détecter des données d'environnement du véhicule (4),
dans lequel l'unité de positionnement (11) est conçue pour déterminer la position des données d'environnement détectées et des objets (31) contenus dans celles-ci,
dans lequel l'unité d'évaluation (10) est conçue pour identifier les objets (31) et des dissimulations (21) des objets (31) dans les données d'environnement et pour les munir d'informations de position,
dans lequel l'unité d'émission/réception (12) est conçue pour transmettre des données générées par l'unité d'évaluation (10) au back-end (2),
dans lequel chacun des objets (31) de la carte routière numérique (3) du back-end (2) présente une valeur de confiance ;
dans lequel le back-end (2) est conçu pour augmenter la valeur de confiance de l'objet respectif (31) si l'objet respectif (31) est contenu dans les données reçues, et
dans lequel le back-end (2) est conçu pour diminuer la valeur de confiance de l'objet respectif (31) si l'objet respectif (31) n'est pas contenu dans les données reçues,
dans lequel, en cas de dissimulation (21) de l'objet (31) dans les données reçues, le back-end (2) est conçu pour ne pas procéder à une réduction de la valeur de confiance de l'objet respectif (31).

11. Procédé permettant de générer des valeurs de confiance pour des objets sur une carte routière numérique, présentant les étapes suivantes consistant à :
- détecter (S1) des données d'environnement par une unité de détection ;
- déterminer (S2) la position des données d'environnement détectées et des objets contenus dans celles-ci ;
- évaluer (S3) des données d'environnement détectées ;
- identifier (S4) des objets et des dissimulations d'objets dans les données d'environnement ;
- munir (S5) les objets identifiés et les dissimulations des objets d'informations de position ;
- transmettre (S6) les données évaluées d'une unité d'émission/réception à un back-end ;
- générer (S7) ou mettre à jour la carte routière numérique du back-end sur la base des données reçues ;
- augmenter (S8) les valeurs de confiance de l'objet respectif si l'objet respectif est contenu dans les données reçues ;
- réduire (S9) la valeur de confiance de l'objet respectif si l'objet respectif n'est pas contenu dans les données reçues, dans lequel en cas de dissimulation de l'objet dans les données reçues, aucune réduction de l'objet respectif n'a lieu.

12. Eléments de programme qui lorsqu'ils sont exécutés sur une unité d'évaluation (10) et un back-end (2) d'un système de génération de valeurs de confiance d'objet selon la revendication 1 ordonnent à l'unité d'évaluation (10) et au back-end (2) d'exécuter le procédé selon la revendication 11.

13. Supports lisibles par ordinateur sur lesquels sont stockés les éléments de programme selon la revendication 12.
